# EUROPEAN PATENT APPLICATION

(11) **EP 0 526 916 A2**
(43) Date of publication of application: **10.02.1993**
(21) Application number: 92118353.9
(22) Date of filing: 08.11.1988
(51) Int. Cl.: G03G 15/00

(54) **Image-forming machine**

(30) Priority: 10.11.1987 JP 282201/87; 11.11.1987 JP 283078/87; 30.11.1987 JP 300074/87; 30.11.1987 JP 300079/87
(62) Divisional of application: 88118572.2
(71) Applicant: MITA INDUSTRIAL CO. LTD., Osaka 540 (JP)
(72) Inventor: Koyama, Shigeo, Ibaraki-shi, Osaka-fu (JP)
(74) Representative: Popp, Eugen, Dr.

(57) **Abstract**

₅n₇ An image-forming machine comprising a main body (602) provided with a conveying passage (69) for conveying sheet materials, and a hand-insertion feed means (70) for feeding sheet materials to the conveying passage (69) through an introduction opening (76) defined in a machine housing (6), and a feed unit (604) provided with a feed means (612) for feeding sheet materials through a delivery opening (620) defined in a feed housing (606) and adapted to be detachably secured to the main body (602); wherein the hand-insertion feeding means (70) is provided with a table (624) mounted so as to be free to pivot between a feed position and a storage position, and when it is at the feed position, it extends toward the introduction opening (76) and conducts a sheet material positioned on its upper surface through the introduction opening (76), and when it is at the storage position, it is positioned along the machine housing (6) and exposes the introduction opening to view outside, and when the table (624) is at the storage position, the feed unit (604) can be secured to the main body (602) of the machine, and when it is detachably secured to the main body (602), the delivery opening (620) of the feed housing (606) is connnected to the introduction opening (76) whereby the action of the feed means (612) causes the sheet material to be delivered through the delivery opening (620) to be fed to the conveying passage (69) through the introduction opening (76).

## Description

### Field of the Invention

This invention relates to an image-forming machine such as a laser beam printer.

### Description of the Prior Art

Image-forming machines such as a laser beam printer generally include an image-bearing means such as a rotating drum having a photosensitive material on its surface, an image-forming means for forming a toner image on the surface of the photosensitive material, a transfer means disposed in a transfer zone, a conveying passage for conveying a sheet material such as a recording sheet through the transfer zone, and a receiving section for receiving the sheet materials conveyed through the conveying passage in the stacked state.

The conventional image-forming machines, however, have not proved to be entirely satisfactory, and are still desired to be improved in various respects.

In an image-forming machine of the type in which a feed unit for automatically feeding sheet materials can be set up in place of a table for conducting the sheet materials to the conveying passage, the feed unit is detachably set up after the table is detached from the main body. Accordingly, the operations of mounting and detaching the feed unit are relatively complex.

### Summary of the Invention

It is an object of this invention to provide an improved image-forming machine in which a feed unit can be mounted by a relatively simple operation.

Other objects of this invention along with its features will become apparent from the following description.

### Brief Description of the Drawings

Figure 1 is a simplified sectional view of a preferred embodiment of a laser beam printer as one example of the image-forming machine of the invention with a feed unit removed from the main body.
Figure 2 is a view showing part of the main body of the laser beam printer of Figure 1 as viewed from right in Figure 1.
Figure 3 is a simplified sectional view showing the laser beam printer of Figure 1 in which the feed unit is mounted on the main body.

### Detailed Description of a Preferred Embodiment

The invention will be described below in detail with reference to the accompanying drawings.

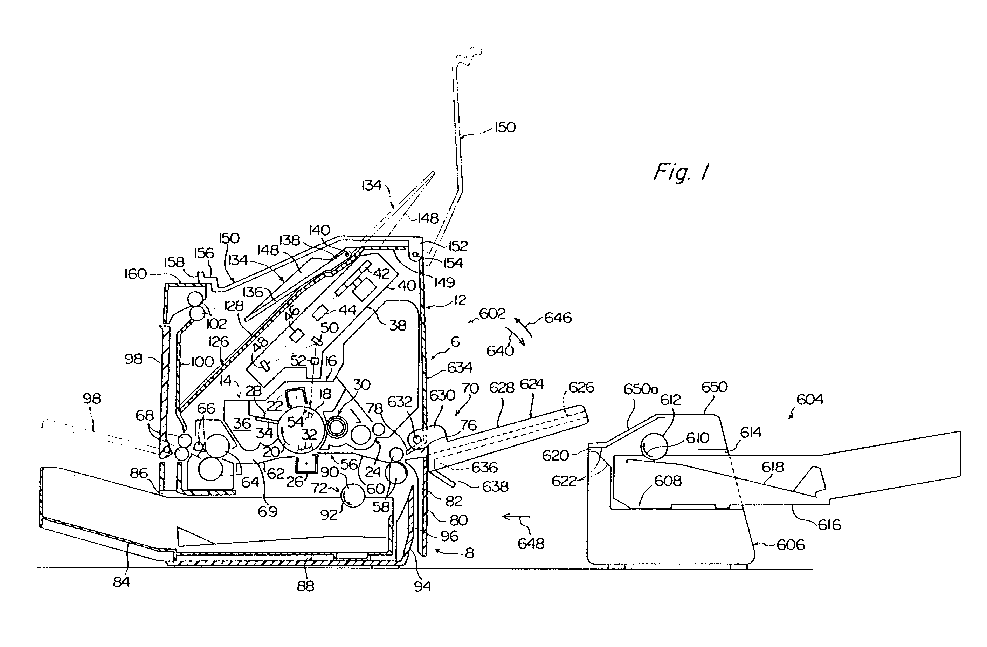

Figures 1 to 3 show a preferred embodiment of the laser beam printer as one example of the image-forming machine in accordance with this invention.

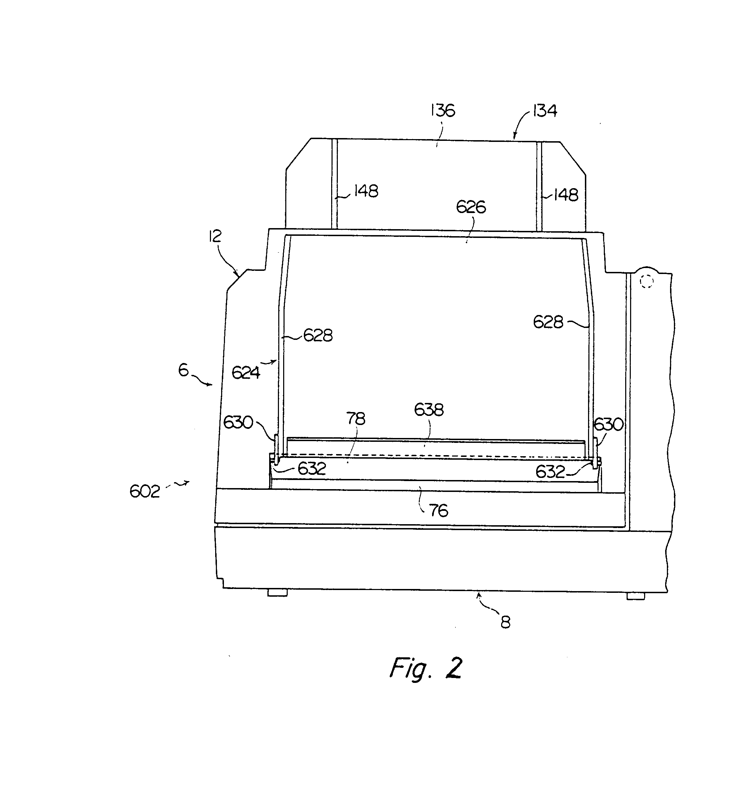

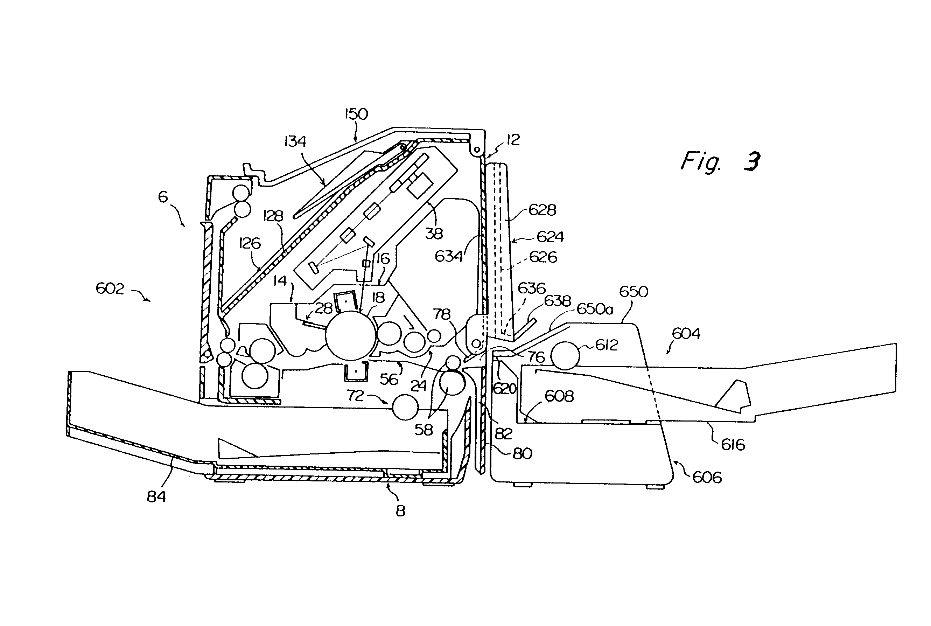

In Figures 1 and 2, the laser beam printer is provided with a main body shown generally at 602 and a feed unit shown generally at 604.

The main body 602 is provided with a rectangular parallelpipedal housing 6 comprised of a lower housing 8, an upper housing 10 and an opening-closing housing 12. The opening-closing housing 12 is mounted on the upper housing 10 so as to be free to pivot between an open position (not shown) and a closed position (shown in Figures 1 to 4).

A process unit 14 is disposed nearly centrally in the housing 6. The illustrated process unit 14 is provided with a unit frame 16 to be detachably mounted on the housing 6, and a rotating drum 18 constituting an image-bearing means is rotatably mounted on the unit frame 16. An electrophotographic sensitive material is disposed on the peripheral surface of the rotating drum 18. Around the rotating drum 18 to be rotated in the direction shown by an arrow 20 are disposed a charging corona discharger 22, a developing device 24, a transfer corona discharger 26 constituting a transfer means and a cleaning device 28. The charging corona discharger 22, the developing device 24 and the cleaning device 28 are mounted on the unit frame 16. The charging corona discharger 22 charges the photosensitive material on the rotating drum 18 to a specific polarity. The developing device 24 is provided with a magnetic brush mechanism 30 and develops a latent electrostatic image formed as described below to a toner image. The transfer corona discharger 26 disposed in a transfer zone 32 applies a corona discharge to the back surface of a sheet material conveyed through a conveying passage as described below. The cleaning device 28 is provided with an elastic blade 34 acting on the surface of the photosensitive material and removes the toner remaining on the surface of the photosensitive material and recovers it in a toner recovery chamber 36.

An optical unit 38 is disposed above the process unit 14 within the housing 6. The optical unit 38 has a box-like unit housing 40, and within the housing 40 are disposed a laser beam source (not shown), a rotating polygon mirror 42 to be moved in a predetermined direction, a first image-forming lens 44, a second image-forming lens 46, a first reflecting mirror 48, a second reflecting mirror 50 and a cylindrical lens 52. The laser beam source (not shown) irradiates a laser beam based on the image information output, for example, from a computer toward the rotating polygon mirror 42. As shown by solid lines in Figure 1, the laser beam reflected from the polygon mirror 42 passes through the first image-forming lens 44 and the second image-forming lens 46 and reaches the first reflecting mirror 48. It is reflected by the first reflecting mirror 48 and the second reflecting mirror 50, passes through the cylindrical lens 12 and is projected onto the surface of the rotating drum 18. A conveying mechanism shown generally at 56 is provided below the process unit 14 within the housing 6. The conveying mechanism 56 is provided with a conveyor roller pair 58, a guide plate 60, a guide plate 62, a fixing roller 64, a guide claw 66 and a conveyor roller pair 68 which defines a main portion of a conveying passage 69 for conveying sheet materials such as recording paper. In the illustrated embodiment, the upstream end of the conveying passage 69 is bifurcated. One part extends to the right in a straight line, and a hand-insertion feed means 70 is disposed at its upstream end. The other part is curved and extends downwardly, and an automatic feed means 72 is disposed at its upstream end (more specifically, below the conveying mechanism 56 and at the bottom part of the housing 6). The hand-insertion feed means 70 is provided with a table 624 which is free to pivot between a feed position shown in Figure 1 and a storage position (Fig. 3) displaced upwardly. When the hand-insertion feed means 70 is to be used, the table 624 is held at the feed position. When a sheet material is positioned on the table 624 and inserted through an opening 76 formed in the right wall surface of the housing 6, the sheet material is conducted to the conveying roller pair 58 past the space between the undersurface of a guide plate 78 and the upper end edge of a guide protrusion 82 provided on the inside surface of the wall 80 of the lower housing 8. The illustrated automatic feed means 72 is provided with a cassette 84 in which sheet materials are loaded in the stacked state. The cassette 84 is detachably loaded into a cassette receiving section 88 defined in the bottom part of the housing 6 through an opening 86 formed in the left wall surface of the lower housing 8. A feed roller 90 is disposed above the cassette receiving section 88. Accordingly, when the feed roller 90 is rotated in the direction shown by an arrow 92, the sheet materials are delivered one by one from the cassette 84. The delivered sheet material is guided by a guide protrusion 96 provided in an upstanding wall 94 in the lower housing 6 and the guide protrusion 82 provided in the wall 80, and conducted to the conveyor roller pair 58.

The downstream end portion of the conveying passage is bifurcated. In this regard, an opening-closing cover 98 constituting part of the opening-closing housing 12 is mounted so as to be free to pivot between a first position shown by a solid line in Figure 1 and a second position shown by a two-dot chain line in Figure 1. When the opening-closing cover 98 is at the first position, the sheet material fed by the conveyor roller pair 68 is further conveyed upwardly and conducted to a discharge roller pair 102 through the space between the opening-closing cover 98 and a wall 100 of the opening-closing housing 12, and is discharged out of the housing 6 by the action of the discharge roller pair 102. On the other hand, when the opening-closing cover 98 is at the second position, the sheet material fed by the conveyor roller pair 68 is directly discharged out of the housing 6 without being conveyed upwardly and received on the inside surface (the upper surface in the state shown by the two-dot chain line) of the cover 98.

With reference to Figure 1, the operation of the image-forming machine described above is briefly stated below.

While the rotating drum 18 is rotated in the direction of arrow 20, the charging corona discharger 22 charges the photosensitive material of the rotating drum 18, and then in the projecting zone 54, a laser beam having a certain piece of image information from the laser beam source (not shown) of the optical unit 38 is projected onto the photosensitive material to form a latent electrostatic image corresponding to the image information on the surface of the photosensitive material. Thereafter, the magnetic brush mechanism 30 of the developing device 24 applies a toner to the latent electrostatic image on the photosensitive material to develop it to a toner image. Thus, by the action of the image-forming machine comprised of the charging corona discharger 22, the optical unit 38 and the developing device 24, a toner image is formed on the rotating drum 18. Then, a sheet material fed from the hand-insertion feed means 70 or the automatic feed means 72 is brought into contact with the photosensitive material in the transfer zone 32 to transfer the toner image from the photosensitive material to the sheet material. The sheet material bearing the toner image is peeled from the rotating drum 18 and conveyed to the fixing roller pair 64. By the action of the fixing roller pair 64, the toner image is fixed to the surface of the sheet material. The sheet material bearing the fixed toner image is conveyed by the conveyor roller pair 68, and when the opening-closing cover 98 is at the second position, directly discharged onto the cover 98. As can be seen from Figure 1, the discharged sheet material has the image-bearing surface turned upwardly. In contrast, when the cover 98 is at the first position, the sheet material conveyed by the conveying roller pair 68 is further conveyed upwardly between the cover 98 and the wall 100, and by the action of the discharge roller pair 102, discharged toward the receiving section 126 provided in the opening-closing housing 12. In this case, the discharged sheet material has the imagebearing surface turned downwardly. The sheet material discharged from the discharge roller pair 102 is received by the receiving section 126 of the housing 12. Meanwhile, the rotating drum 18 continues to rotate, and by the action of the cleaning device 28, the toner remaining on the photosensitive material is removed.

With reference to Figure 3 as well as Figures 1 and 2, the receiving section 126 provided in the opening-closing housing 12 and elements relating to it will be described.

In the illustrated embodiment, the receiving section 126 is defined by the upwardly extending wall 100 and an inclined upper wall 128 extending upwardly inclinedly to the right in Figures 1 and 3. The receiving surface defined by the upper surface of the inclined upper wall 128 extends in a straight line upwardly inclinedly at an angle of about 45 degrees from one end portion (the left end portion in Figures 1 to 3) of the main body 602 to its other end portion (the right end portion in Figures 1 to 3).

An auxiliary receiving member 134 is disposed on the upper end portion of the receiving section 126, namely on the upper end portion of the inclined upper wall 128. The illustrated auxiliary receiving member 134 is constructed of a plate-like member 136, and supporting projections 138 (only one of which is shown in Figures 1 and 3) provided in both ends of the plate-like member 136 are mounted on the upper end portion of the inclined upper wall 128 via pins 140 in such a manner as to be free to rotate. A pair of triangular supporting and guiding protrusions 148, spaced from each other in the direction perpendicular to the sheet surface in Figures 1 and 3 and in the vertical direction in Figure 2, are provided in the right surface in Figures 1 and 3 of the plate-like member 136. The auxiliary receiving member 134 of the above structure is free to pivot between a first position and a second position shown in Figure 1. When the auxiliary receiving member 134 is pivoted to the first position, a supporting surface of the pair of supporting and guiding protrusions 148 abut with the upper wall 149 of the housing 12 to hamper accurately the pivoting movement of the auxiliary receiving member 134 in the opening direction. When the auxiliary receiving member 134 is pivoted to the second position, it abuts with the inclined upper wall 128 to hamper accurately the pivoting movement of the auxiliary receiving member 134 in the closing direction. At the first or opening position, the auxiliary receiving member 134 is positioned downstream of the receiving section 126 in the sheet material discharging direction and its one surface (the left surface in Figure 1) extends further from the other end of the upper surface of the inclined upper wall 128 to the right in Figure 1 upwardly inclinedly in a straight line. At the second position, the auxiliary receiving member 134 is positioned above the other end portion of the receiving portion 126, and its other surface, particularly the guide surfaces of the supporting and guiding protrusions 148 are located above the inclined upper wall 128 and extend upwardly inclinedly in a straight line to the right in Figure 3.

An upper cover member 150 (omitted in Figure 2) for covering the receiving section 126 is attached to the opening-closing housing 12. The upper cover member 150 is plate-like, and is bent slightly at its central part in the left-right direction in Figure 3. Protruding portions 152 are provided at both ends of the base portion of the upper cover member 150, and a stop portion 156 is provided in the free end portion of the upper cover member 150. The protruding portions 152 are rotatably mounted to the opening-closing housing 12 via pins 154. A gripping protrusion 158 is further provided at the end of the stop portion 156. With this arrangement, the upper cover member 150 can be easily pivoted in the directions and positions shown in Figure 1 by holding the gripping protrusion 158. When the upper cover member 150 is pivoted in the opening direction and held at an open position shown by a two-dot chain line in Figure 1, the overhead space of the receiving section 126 is open to view. When the upper cover member 150 is pivoted in the closing direction and held at a closed position shown both in Figure 1 and Figure 3, the overhead space of the receiving section 126 is covered and the receiving section 126 is not exposed to view. Thus, the stop portion 156 of the upper cover member 150 abuts with the wall 160 of the opening-closing housing 12. As a result, the upper cover member 150 is accurately prevented from pivoting further beyond the closed position.

In Figure 1, the feed unit 604 is provided with a nearly rectangular parallelpipedal feed housing 606, and a feed means is mounted on it. The feed means has a cassette receiving section 608 defined within the housing 606, and a feed roller 612 to be rotated in the direction shown by an arrow 610 is disposed above the cassette receiving section 608. A loading opening 614 is defined in the right surface in Figure 1 of the housing 606, and a box-like cassette 616 is detachably loaded into the cassette-receiving section 608 through the opening 614. A carrying plate 618 adapted to be biased upwardly by the action of a biasing means (not shown) with its rear end as a fulcrum is provided in the cassette 616. Sheet materials in the stacked state are filled in the carrying plate 618. A delivery opening 620 is defined in the left surface of the feed housing 516 in Figure 1. A pair of guide plates 622 defining a delivery passage are disposed between the delivery opening 620 and the cassette-receiving section 608.

When in this feed unit 604, the feed roller 612 is rotated in the direction of arrow 610, the uppermost sheet material in the cassette 616 is fed from the cassette 616 by the action of the feed roller 612. The fed sheet material passes between the pair of guide plates 622 and is conveyed to the delivery opening 620. It is delivered outside the feed housing 606 through the delivery opening 620.

The illustrated embodiment is further constructed as shown below with regard to the hand-insertion feed means 70. The hand-insertion feed means 70 includes - as already mentioned above - a table 624. The table 624 is provided with a plate-like main body 626, and side walls 628 are provided at both side ends of the main body 626 (see Figure 2). The inner surfaces of the side walls 628 act as a guide surface for guiding the sheet material in the inserting direction. At one end portion (the downstream end portion of the sheet inserting direction, and in Figure 1, the left end portion) of each of the side walls 628 is provided integrally a supporting protrusion 630 extending to the left in Figure 1. The supporting projection 630 is pivotally mounted on a bracket member (not shown) secured to the inner surface of the right wall 634 of the housing 12 via supporting pins 632. In the illustrated embodiment, an abutting piece 636 extending nearly perpendicularly from the main body 626 of the table 624 is provided in the base portion (the downstream end portion in the sheet inserting direction) of the main body 626, and a guide projecting piece 638 is provided integrally in the end of the abutting piece 636.

With the above structure, when a sheet material is to be fed by the hand-insertion feed means 70, the table 624 is held at a feed position shown in Figure 1. When the table 624 is pivoted downwardly in the direction of an arrow 640, the abutting piece 636 abuts with the wall 80 of the lower housing 8 to hold the table 624 exactly at the feed position. At the feed position, the upper surface of the main body 626 of the table extends nearly horizontally toward the introduction opening 76 defined in the right surface of the machine housing 6. Accordingly, when a sheet material is positioned on the upper surface of the main body 626 and moved along the inner surfaces of the side walls 628, the sheet material is introduced into the machine housing 6 through the introduction opening 76. The sheet material so introduced passes between the upper edge of the guiding protrusion 82 provided in the wall 80 and the guide plate 78 and is fed into the conveying passage 69. On the other hand, when the table 624 is to be stored, the table 624 is held at a storage position shown in Figures 2 and 3. When the table 624 is pivoted upwardly from the feed position at an angle of about 90 degrees in the direction shown by arrow 646, the upper edges of the side walls 628 of the table 624 abut with the wall 634 of the housing 12 to hold the table 24 in the storage position. At the storage position, the table 624 extends nearly perpendicularly in the upward direction substantially along the wall 634 of the opening-closing housing 12, and is stored outwardly of the wall 634, as shown in Figure 3. When the table 624 is thus held at the storage position, the introduction opening 76 is opened to outside view below the abutting piece 636 of the table 624.

In the illustrated embodiment, the feed unit 604 is adapted to be detachably secured to that side of the machine housing 6 at which the introduction opening 76 is formed.

To secure the feed unit 604 to the housing 6, the table 624 is held at the storage position in the manner described above. Then, the feed unit 604 is moved in the direction of arrow 648 (Figure 1) and held at the position shown in Figure 3. Thereafter, the feed unit 604 is connected to the main body 602 of the machine by a releasable lock means (not shown). The lock means (not shown) may be a known means equipped with, for example, an engaging member, which is free to pivot between a locking position at which it engages part of the main body 602 and a non-locking position at which the above engagement is cancelled. When the feed unit 604 is thus secured, the delivery opening 620 defined in the feed housing 606 is connected to the introduction opening 76 exposed to outside below the table 624. As a result, the sheet material delivered from the delivery opening 620 is introduced into the machine housing 6 through the introduction opening 76 and fed to the conveying passage past the space between the upper edge of the guide protrusion 82 and the guide plate 78. Furthermore, in Figure 3, a space is created between the abutting piece 636 and the guide projecting piece 638 and the part 650a of the upper wall 650 of the housing 606, and the left end of this space in Figure 3 is connected to the introduction opening 76. The delivery opening 620 is connected to the lower portion of the introduction opening 76, and the above space, to the upper portion of the introduction opening 76. It will be readily understood that the space so formed can be used as an insertion opening for inserting a sheet material by hand. The sheet material inserted through the insertion opening is guided between the part 650a of the upper wall 650 and the guide projecting piece 638 and the abutting piece 636 and fed to the conveying passage through the introduction opening 76.

The feed unit 604 may be removed by releasing the locking obtained by the locking means (not shown) and then moving the feed unit 604 in a direction opposite to the direction of arrow 648. When the hand-insertion feed means 70 is used, the table 624 is pivoted in the direction of arrow 646 and held at the feed position.

## Claims

1. An image-forming machine comprising a main body (602) provided with a conveying passage (69) for conveying sheet materials, and a hand-insertion feed means (70) for feeding sheet materials to the conveying passage (69) through an introduction opening (76) defined in a machine housing (6), and a feed unit (604) provided with a feed means (612) for feeding sheet materials through a delivery opening (620) defined in a feed housing (606) and adapted to be detachably secured to the main body (602); wherein the hand-insertion feeding means (70) is provided with a table (624) mounted so as to be free to pivot between a feed position and a storage position, and when it is at the feed position, it extends toward the introduction opening (76) and conducts a sheet material positioned on its upper surface through the introduction opening (76), and when it is at the storage position, it is positioned along the machine housing (6) and exposes the introduction opening to view outside, and when the table (624) is at the storage position, the feed unit (604) can be secured to the main body (602) of the machine, and when it is detachably secured to the main body (602), the delivery opening (620) of the feed housing (606) is connnected to the introduction opening (76) whereby the action of the feed means (612) causes the sheet material to be delivered through the delivery opening (620) to be fed to the conveying passage (69) through the introduction opening (76).

2. The image-forming machine of claim 1 in which the table (624) is free to pivot between the feed position at which it extends nearly horizontally and the storage position at which it pivots about 90 degrees and extends nearly perpendicularly; and when the table (624) is held at the storage position, the introduction opening (76) is exposed to view outside below the table (624).

3. The image-forming machine of claim 1 in which a guide projecting piece (638) is provided in the base portion of the table (624), and when the table is held at the storage position and the feed unit (604) is then secured detachably to the main body (602) of the machine, an insertion opening for conducting a sheet material to the conveying passage (69) through the introduction opening (76) is defined between part (650a) of the upper wall (650) of the feed housing (606) and the guide projecting piece (638).
